# EUROPÄISCHE PATENTSCHRIFT

(11) **EP 3 873 774 B1**
(45) Veröffentlichungstag und Bekanntmachung des Hinweises auf die Patenterteilung: **07.06.2023**
(21) Anmeldenummer: 19798201.0
(22) Anmeldetag: 28.10.2019
(51) Int. Cl.: B60N 2/02, B60N 2/56, B60N 2/62

(54) **FAHRZEUGSITZ FÜR EIN KRAFTFAHRZEUG**
VEHICLE SEAT FOR A MOTOR VEHICLE
SIÈGE DE VÉHICULE POUR UN VÉHICULE AUTOMOBILE

(30) Priorität: 29.10.2018 DE 102018218494
(43) Veröffentlichungstag der Anmeldung: 08.09.2021
(73) Patentinhaber: VOLKSWAGEN AKTIENGESELLSCHAFT, 38440 Wolfsburg (DE)
(72) Erfinder: BINNER, Friederike, 38162 Weddel (DE)
(86) Internationale Anmeldenummer: PCT/EP2019/079340
(87) Internationale Veröffentlichungsnummer: WO 2020/089141

(56) Entgegenhaltungen:
- EP-A2- 1 974 991
- DE-B3-102004 004 388
- JP-A- 2005 253 705
- JP-A- 2012 183 154
- US-A1- 2015 069 811
- US-A1- 2018 162 243
- US-B1- 6 848 742

## Beschreibung

Die Erfindung betrifft einen Fahrzeugsitz für ein Kraftfahrzeug, mit einem auf einem Fahrzeugboden befestigbaren Sitzgestell, mit einem von dem Sitzgestell getragenen Sitzteil, und mit einer Belüftungseinrichtung, die zumindest eine ansteuerbare Luftfördereinrichtung und eine mit der Luftfördereinrichtung strömungstechnisch verbundene Ausströmereinrichtung aufweist.

Fahrzeugsitze der eingangs genannten Art sind aus dem Stand der Technik bekannt. So zeigt beispielsweise die Offenlegungsschrift DE 10 2010 005 728 A1 einen Sitzteilaufbau für ein Sitzkissenteil eines Fahrzeugsitzes, mit einer an einem Sitzteilträger gehaltenen luftdurchlässigen Spannlage, welche durch einen Bezug abgedeckt ist. Sowohl dem Sitzkissenteil als auch dem Rückenlehnenteil sind jeweils eine Belüftungseinrichtung zugeordnet, welche dazu dient, durch Polster und Bezug hindurch einen Luftstrom zu erzeugen. Auch die Offenlegungsschrift DE 10 2012 005 378 A1 offenbart ein Fahrzeugsitz mit einer Belüftungseinrichtung, die dem Sitzteil zugeordnet ist.

Weitere Sitze mit Belüftungseinrichtungen sind aus den Offenlegungsschriften US 2018/162243 A1 und JP 2005 253705 A bekannt. Aus der Offenlegungsschrift EP 1 974 991 A2 ist ein Sitz mit einer Sitztiefenverlängerung mit einer elektrischen Sitzheizung bekannt.

Der Erfindung liegt die Aufgabe zugrunde, einen verbesserten Fahrzeugsitz zu schaffen, der den Komfort für den Benutzer weiter durch eine verbesserte Belüftung erhöht.

Die der Erfindung zugrundeliegende Aufgabe wird durch einen Fahrzeugsitz mit den Merkmalen des Anspruchs 1 gelöst. Dieser hat den Vorteil, dass durch eine variable Einstellung des Sitzteils der Sitzkomfort für den Benutzer verbessert und insbesondere ergonomisch optimierbar ist. Darüber hinaus ist es trotz der vorgeschlagenen Verstellbarkeit des Sitzteils gewährleistet, dass der auf dem Fahrzeugsitz befindliche Benutzer vorteilhaft gekühlt beziehungsweise klimatisiert werden kann. Erfindungsgemäß wird dies dadurch erreicht, dass auf dem Sitzgestell ein das Sitzteil verlängerndes Sitzteilelement längsverschieblich zu dem Sitzteil gelagert ist, und dass das Sitzteilelement die Belüftungseinrichtung aufweist. Die Belüftungseinrichtung ist somit in das verschiebbare Sitzteilelement integriert. Durch das Längsverschieben des Sitzteilelements lässt sich die Sitzfläche des Sitzteils insgesamt verlängern oder verkürzen, je nachdem in welche Richtung das Sitzteilelement bewegt wird. Dadurch, dass nunmehr eine eigene Belüftungseinrichtung in dem Sitzteilelement vorgesehen ist, ist eine Belüftung auch dort einfach und vorteilhaft erreicht.

Erfindungsgemäß weist das Sitzteilelement eine auf dem Sitzgestell verschieblich, insbesondere längsverschieblich gelagerte Tragplatte auf, auf welcher ein Sitzpolster angeordnet ist, wobei die Luftfördereinrichtung auf der Tragplatte in dem Sitzpolster angeordnet ist. Dadurch ist die Luftfördereinrichtung bauraumtechnisch vorteilhaft in das Sitzteilelement integriert und durch das Sitzpolster zum einen und die Tragplatte zum anderen geschützt. Die Tragplatte bietet außerdem einen vorteilhaften Halt der Luftfördereinrichtung in dem Fahrzeugsitz und dient insbesondere auch zum Tragen des Sitzpolsters. Durch die Tragplatte ist das Sitzelement einfach verschiebbar auf dem Sitzgestell lagerbar. Insbesondere ist dazu zwischen Tragplatte und Sitzgestell ein Schiebegelenk, insbesondere eine Schienenführung, ausgebildet. Bevorzugt ist die Tragplatte auf einer Grundplatte verschiebbar, insbesondere längsverschieblich, gelagert, und die Grundplatte auf dem Sitzgestell befestigt oder befestigbar. Insbesondere ist die Grundplatte auf dem Sitzgestell verschraubt. Durch das Vorsehen der Grundplatte wird der Vorteil erreicht, dass die Schiebeführung in die Grundplatte und die Tragplatte eingearbeitet ist, beispielsweise in Form einer Schienenführung, sodass das Sitzgestell selbst nicht mit einer Schienenführung versehen werden muss. Hierdurch werden der konstruktive Aufwand sowie die Herstellungskosten reduziert.

Erfindungsgemäß ist die Luftfördereinrichtung zumindest bereichsweise in einem Schnittschaum eingehaust. Der Schnittschaum bietet eine konstruktiv einfache Möglichkeit, mit nur geringem Gewicht einen Schutz für die Luftfördereinrichtung zu gewährleisten und das Komfortempfinden zu erhöhen, insbesondere aufgrund einer verbesserten Polsterung der Luftfördereinrichtung in dem Fahrzeugsitz. Der Schnittschaum ist einfach an die Gegebenheit des Fahrzeugsitzes und insbesondere der Luftfördereinrichtung anpassbar.

Erfindungsgemäß weist das Sitzpolster einen oder mehrere Luftführungskanäle auf, die von der Luftfördereinrichtung und/oder dem Schnittschaum zu der Ausströmereinrichtung führen. Durch die Luftführungskanäle wird gewährleistet, dass der von der Luftfördereinrichtung bereitgestellte Luftstrom dem Benutzer des Fahrzeugsitzes zugutekommt. Durch den einen oder die mehreren Luftführungskanäle wird der Luftstrom vorteilhaft gezielt zu der Ausströmereinrichtung geführt, sodass Strömungsverluste vermieden werden.

Gemäß einer bevorzugten Weiterbildung der Erfindung weist der Schnittschaum zumindest einen weiteren Luftführungskanal auf, der mit der Luftfördereinrichtung einerseits und mit dem einen oder den mehreren Luftführungskanälen des Sitzpolsters andererseits strömungstechnisch verbunden ist. Dadurch erfolgt eine Luftströmung durch den Schnittschaum hindurch zu der Ausströmereinrichtung. Durch die Verwendung von Schnittschaum sind die Luftführungskanäle oder der zumindest eine Luftführungskanal, der sich direkt an die Luftfördereinrichtung anschließt, besonders kostengünstig realisierbar.

Weiterhin ist bevorzugt vorgesehen, dass die Ausströmereinrichtung als luftdurchlässige Spannlage, insbesondere Textillage, eines Polsterbezugs des Sitzteilelements ausgebildet ist. Dadurch ist die Ausströmereinrichtung vorteilhaft in den Polsterbezug integriert und bietet einen vorteilhaften Anströmungskomfort für eine auf dem Fahrzeugsitz befindliche Person.

Insbesondere ist die Luftfördereinrichtung als elektromotorisches Gebläse ausgebildet, wobei das Gebläse vorzugsweise zumindest im Wesentlichen mittig auf der Tragplatte angeordnet ist. Durch die Ausbildung als elektromotorisches Gebläse ist die Luftfördereinrichtung jederzeit bei Bedarf ansteuerbar und aktivierbar. Insbesondere ist damit das Sitzteilelement individuell belüftbar, insbesondere unabhängig von gegebenenfalls in dem Sitzteil und/oder der Rückenlehne vorhandenen Belüftungseinrichtungen.

Gemäß einer bevorzugten Weiterbildung der Erfindung erstreckt sich der zumindest eine weitere Luftführungskanal des Schnittschaums zumindest im Wesentlichen in der Ebene des Sitzteilelements. Dadurch dient der weitere Luftführungskanal insbesondere zur Verteilung des von der Luftfördereinrichtung bereitgestellten Luftstroms innerhalb des Sitzteilelements. Es wird gewährleistet, dass der Luftstrom weite Bereiche des Sitzteilelements in vorteilhafter Weise erreicht.

Weiterhin erstrecken sich die Luftführungskanäle des Sitzpolsters erfindungsgemäß im Wesentlichen senkrecht zur Ebene des Sitzteilelements. Dadurch wird der zur Verfügung gestellte Luftstrom zumindest im Wesentlichen senkrecht zur Sitzfläche des Sitzpolsters nach außen geführt, um eine vorteilhafte Belüftung der auf dem Fahrzeugsitz befindlichen Position gewährleistet.

Besonders bevorzugt weist das Gebläse ein Gehäuse auf, das an der Tragplatte verschraubt und/oder verrastet ist. Dadurch ist eine einfache Montage in die Luftfördereinrichtung an der Tragplatte des Sitzteilelements gewährleistet.

Weiterhin ist bevorzugt vorgesehen, dass in dem Sitzteil eine Rückenlehne insbesondere verschwenkbar gelagert angeordnet ist. Dadurch wird ein Fahrzeugsitz geboten, der sowohl Sitzteil als auch Rückenlehne bietet, um einen vorteilhaften Sitzkomfort zu gewährleisten. Dabei weisen das Sitzteil und/oder die Rückenlehne jeweils eine weitere Belüftungseinrichtung auf, sodass Sitzteil, Rückenlehne und Sitzteilelement unabhängig voneinander belüftbar sind, sodass ein größtmöglicher Belüftungskomfort gewährleistet ist.

Im Folgenden soll die Erfindung anhand der Zeichnung näher erläutert werden. Dazu zeigen
- Figur 1: einen vorteilhaften Fahrzeugsitz in einer perspektivischen Darstellung,
- Figur 2: eine vereinfachte Schnittdarstellung durch den Fahrzeugsitz und
- Figur 3: eine Explosionsdarstellung eines vorteilhaften Sitzteilelements des Fahrzeugsitzes.

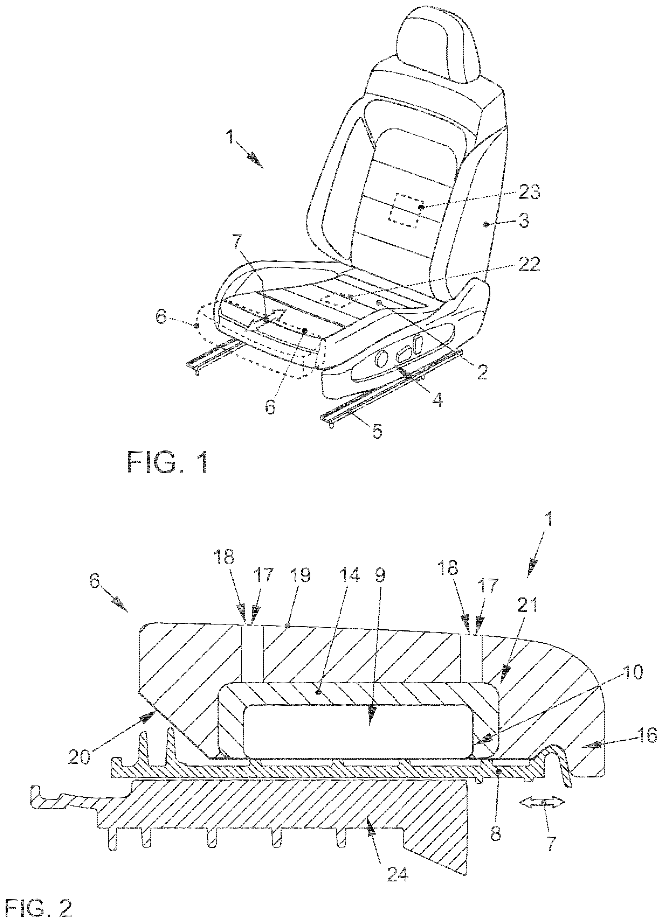

Figur 1 zeigt in einer vereinfachten perspektivischen Darstellung einen Fahrzeugsitz 1 für ein Kraftfahrzeug, der ein Sitzteil 2 und eine an dem Sitzteil 2 verschwenkbar gelagerte Rückenlehne 3 aufweist. Das Sitzteil 2 weist außerdem ein Sitzgestell 4 auf, durch welches der Fahrzeugsitz 1 auf einen Fahrzeugboden eines Kraftfahrzeugs befestigbar ist. Das Sitzgestell 4 weist dazu Führungsschienen 5 auf, die auf dem Fahrzeugboden arretierbar, insbesondere verschraubbar sind. Die Führungsschienen 5 erlauben eine Längsverschiebung des Fahrzeugsitzes 1 entlang der Führungsschienen 5, um die Sitzposition in Längserstreckung im Fahrzeuginnenraum anzupassen.

Auf dem Sitzgestell 4 ist außerdem ein das Sitzteil 2 verlängerndes Sitzteilelement 6 längsverschieblich angeordnet, das, wie durch einen Doppelpfeil 7 in Figur 1 und eine gestrichelte zweite Position des Sitzteilelements 6 gezeigt, verschiebbar ist.

Figur 2 zeigt eine Längsschnittdarstellung durch den Fahrzeugsitz 1 im Bereich des Sitzteilelements 6. Das Sitzteilelement 6 weist eine Tragplatte 8 auf, die auf dem Sitzgestell 4 längsverschieblich gemäß Doppelpfeil 7 gelagert ist. Bevorzugt ist die Tragplatte 8 auf einer Grundplatte 24 verschiebbar gelagert, wobei die Grundplatte 24 auf dem Sitzgestell 4 befestigbar oder befestigt, insbesondere verschraubbar oder verschraubt ist. Dabei weist die Grundplatte 24 vorteilhafterweise eine Schienenführung für die Tragplatte 8 auf. Dazu weist beispielsweise die Grundplatte 24 eine oder mehrere parallel zueinander angeordnete nutförmige Vertiefungen auf, in welchen ein oder mehrere bolzen- oder stegförmige Vorsprünge der Tragplatte 8 verschiebbar einliegen. Auf der Tragplatte 8 ist eine Luftfördereinrichtung 9 angeordnet und befestigt. Insbesondere ist dazu ein Gehäuse 10 der Luftfördereinrichtung 9 an der Tragplatte 8 verschraubt oder verrastet.

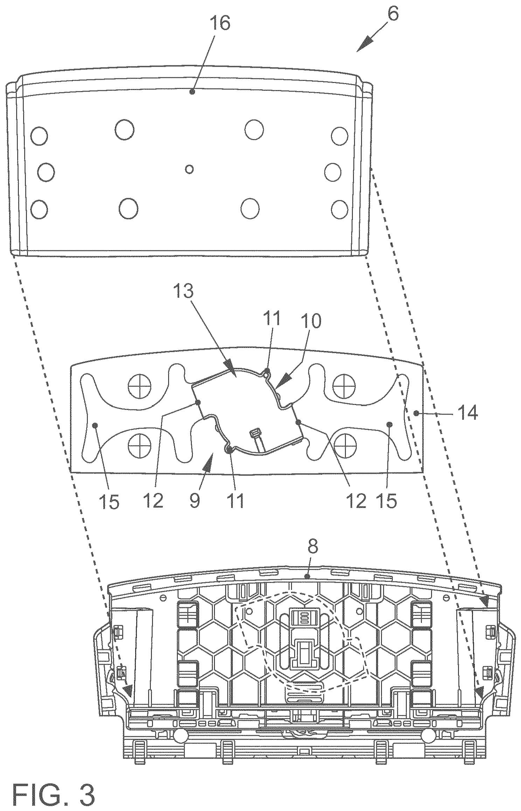

Figur 3 zeigt zur weiteren Erläuterung das Sitzteilelement 6 in einer Explosionsdarstellung. Das Gehäuse 10 der Luftfördereinrichtung 9 ist gemäß dem vorliegenden Ausführungsbeispiel S-förmig ausgebildet und weist Schraubenöffnungen 11 zum Verschrauben auf der Tragplatte 8 auf.

Das Gehäuse 10 weist zwei Austrittsöffnungen 12 auf, die an einander abgewandten Seiten des Gehäuses ausgebildet sind. In dem Gehäuse 10 ist ein elektromotorisches Gebläse 13 angeordnet, das einen Elektromotor aufweist, der mit einem Lüfterrad gekoppelt ist, um bei Bedarf einen Luftstrom zu erzeugen, der durch die Austrittsöffnungen 12 aus dem Gehäuse 10 austreten kann.

Das Gehäuse 10 ist durch einen Schnittschaum 14 eingehaust, wie in Figuren 2 und 3 gezeigt. Der Schnittschaum weist insbesondere an seiner der Tragplatte 8 zugewandten Unterseite eine Aussparung oder Vertiefung für das Gehäuse 10 auf, sowie von der Aussparung ausgehende Luftführungskanäle 15, die sich jeweils zu einer Seite des Sitzteilelements 6 erstrecken. Dabei erstrecken sich die Luftführungskanäle zumindest im Wesentlichen in der Ebene des Sitzteilelements 6 derart, dass weite Bereiche des Sitzteilelements von den Führungskanälen 15 erreicht werden. Der Schnittschaum 14 erstreckt sich dazu zumindest im Wesentlichen über die gesamte Breite und Länge der Tragplatte 8. Insbesondere ist der Schnittschaum 14 insgesamt höher als das Gehäuse 10 der Luftfördereinrichtung 9 ausgebildet und die Aussparung oder Vertiefung an der der Tragplatte 8 zugewandten Unterseite angefertigt. Dadurch wird erreicht, dass das Gehäuse 10 von dem Schnittschaum 14 überdeckt und dadurch das Gebläse 13 durch den Schnittschaum 14 mitgeschützt ist. Darüber hinaus wird auch der Komfort erhöht, weil der Schnittschaum 14 nicht von dem Sitzpolster 16 in die Luftführungskanäle 15 einfallen kann.

Der Schnittschaum 14 ist, wie insbesondere in Figur 2 ersichtlich, durch ein Sitzpolster 16 überdeckt, das ebenfalls Luftführungskanäle 17 aufweist, die mit den Luftführungskanälen 15 strömungstechnisch verbunden sind. Die Luftführungskanäle 17 erstrecken sich jedoch zumindest im Wesentlichen senkrecht zu der Ebene des Sitzteilelements 6 und führen zu Ausströmereinrichtungen 18 des Sitzteilelements 6. Gemäß dem vorliegenden Ausführungsbeispiel weisen die Ausströmereinrichtungen 18 eine luftdurchlässige Spannlage 19 des Sitzpolsters 16 auf, die eine Textillage und die Sitzoberfläche bildet und zumindest im Bereich der Luftführungskanäle 17 perforiert ausgebildet ist, sodass der von dem Gebläse 13 bereitgestellte Luftstrom durch die Luftführungskanäle 15 und 17 sowie die perforierte Spannlage 19 aus dem Sitzteilelement 6 austreten und eine auf dem Fahrzeugsitz 1 befindliche Person belüften oder klimatisieren kann.

Optional ist außerdem zwischen dem Sitzpolster 16, dem Schnittschaum 14 und der Luftfördereinrichtung 9 einerseits und der Tragplatte 8 andererseits eine Dichtmatte 20 angeordnet, die insbesondere als Abdichtvlies ausgebildet ist, und verhindert, dass Luft aus den Luftkanälen 15, 17 in Richtung des Sitzgestells 4 entweichen kann.

Die Luftfördereinrichtung 9 bildet zusammen mit den Luftführungskanälen 15 und 17 sowie aus Ausströmereinrichtungen 18 eine vorteilhafte Belüftungseinrichtung 21 des Sitzteilelements 6. Sie gewährleistet, dass unabhängig von der Schiebestellung des Sitzteilelements 6 die auf dem Fahrzeugsitz 1 befindliche Person mit klimatisierter oder frischer Luft versorgt beziehungsweise beaufschlagt werden kann. Durch das vorgeschlagene Ausführungsbeispiel wird erreicht, dass die Belüftungseinrichtung 21 bauraumoptimiert in das Sitzteilelement 6 integriert ist. Durch das Verschieben des Sitzteilelements 6 hat der Benutzer die Möglichkeit, die Sitzteillänge anzupassen und dadurch den höchstmöglichen Sitzkomfort zu erzielen, ohne dass er dabei auf eine Klimatisierung oder Belüftung insbesondere des Kniebereichs verzichten muss.

Vorteilhafterweise sind in der Rückenlehne 3 sowie in dem Sitzteil 2 zusätzlich jeweils eine Belüftungseinrichtung 22 beziehungsweise 23 angeordnet und insbesondere wie die Belüftungseinrichtung 21 ausgebildet und in die Polsterung der Rückenlehne 3 beziehungsweise des Sitzteils 2 integriert. Hierdurch ist gewährleistet, dass die auf dem Fahrzeugsitz 1 befindliche Person vorteilhaft mit Frischluft und/oder klimatisierter Luft versorgbar ist.

### Bezugszeichenliste

- 1: Fahrzeugsitz
- 2: Sitzteil
- 3: Rückenlehne
- 4: Sitzgestell
- 5: Führungsschiene
- 6: Sitzteilelement
- 7: Doppelpfeil
- 8: Tragplatte
- 9: Luftfördereinrichtung
- 10: Gehäuse
- 11: Schraubenöffnung
- 12: Austrittsöffnung
- 13: Gebläse
- 14: Schnittschaum
- 15: Führungskanal
- 16: Sitzpolster
- 17: Luftführungskanal
- 18: Ausströmereinrichtung
- 19: Spannlage
- 20: Dichtmatte
- 21: Belüftungseinrichtung
- 22: Belüftungseinrichtung
- 23: Belüftungseinrichtung
- 24: Grundplatte

## Patentansprüche

1. Fahrzeugsitz (1) für ein Kraftfahrzeug, mit einem auf einem Fahrzeugboden befestigbaren Sitzgestell (4), mit einem von dem Sitzgestell (4) getragenen Sitzteil (2) und mit einer Belüftungseinrichtung (21), die zumindest eine ansteuerbare Luftfördereinrichtung (9) und zumindest eine mit der Luftfördereinrichtung (9) strömungstechnisch verbundene Ausströmereinrichtung (18) aufweist, wobei auf dem Sitzgestell (4) ein das Sitzteil (2) verlängerndes Sitzteilelement (6) längsverschieblich zu dem Sitzteil (2) gelagert ist, und wobei das Sitzteilelement (6) die Belüftungseinrichtung (21) aufweist, **dadurch gekennzeichnet, dass** das Sitzteilelement (6) eine auf dem Sitzgestell (4) verschieblich gelagerte Tragplatte (8) aufweist, auf welcher ein Sitzpolster (16) angeordnet ist, wobei die Luftfördereinrichtung (9) auf der Tragplatte (8) in dem Sitzpolster (16) angeordnet ist, dass die Luftfördereinrichtung (9) zumindest bereichsweise von einem Schnittschaum (14) eingehaust ist, dass das Sitzpolster (16) zumindest einen Luftführungskanal (17) aufweist, der von dem Schnittschaum (14) zu der Ausströmereinrichtung (18) führt, und dass sich der zumindest eine Luftführungskanal (17) des Sitzpolsters (16) zumindest im Wesentlichen senkrecht zur Ebene des Sitzteilelements (6) erstreckt.

2. Fahrzeugsitz nach Anspruch 1, **dadurch gekennzeichnet, dass** der Schnittschaum (14) zumindest einen weiteren Luftführungskanal (15) aufweist, der mit der Luftfördereinrichtung (9) einerseits und mit dem einen oder den mehreren Luftführungskanälen (17) des Sitzpolsters (16) andererseits strömungstechnisch verbunden ist.

3. Fahrzeugsitz nach einem der vorhergehenden Ansprüche, **dadurch gekennzeichnet, dass** die Ausströmereinrichtung (18) als luftdurchlässige Spannlage (19), insbesondere Textillage, eines Polsterbezugs des Sitzteilelements (6) ausgebildet ist.

4. Fahrzeugsitz nach einem der vorhergehenden Ansprüche, **dadurch gekennzeichnet, dass** die Luftfördereinrichtung (9) als elektromotorisches Gebläse (13) ausgebildet ist, wobei das Gebläse (13) zumindest im Wesentlichen mittig auf der Tragplatte (8) angeordnet ist.

5. Fahrzeugsitz nach Anspruch 2, **dadurch gekennzeichnet, dass** sich der zumindest eine weitere Luftführungskanal (15) des Schnittschaums (14) zumindest im Wesentlichen in der Ebene des Sitzteilelements (6) erstreckt.

6. Fahrzeugsitz nach Anspruch 4, **dadurch gekennzeichnet, dass** das Gebläse (13) ein Gehäuse (10) aufweist, das an der Tragplatte (8) verschraubt und/oder verrastet ist.

7. Fahrzeugsitz nach einem der vorhergehenden Ansprüche, **dadurch gekennzeichnet, dass** an dem Sitzteil (2) eine Rückenlehne (3) insbesondere verschwenkbar gelagert angeordnet ist.

8. Fahrzeugsitz nach einem der vorhergehenden Ansprüche, **dadurch gekennzeichnet, dass** das Sitzteil (2) und/oder die Rückenlehne (3) jeweils eine weitere Belüftungseinrichtung (22,23) aufweisen.

## Claims

1. Vehicle seat (1) for a motor vehicle, comprising a seat frame (4) that can be secured to a vehicle floor, comprising a seat part (2) carried by the seat frame (4), and comprising a ventilation device (21), which has at least one controllable air-conveying device (9) and at least one outlet device (18) connected fluidically to the air-conveying device (9), wherein a seat part element (6) extending the seat part (2) is mounted on the seat frame (4) such that it can be displaced longitudinally relative to the seat part (2), and wherein the seat part element (6) has the ventilation device (21), **characterized in that** the seat part element (6) has a support plate (8) displaceably mounted on the seat frame (4), on which a seat cushion (16) is arranged, wherein the air-conveying device (9) is arranged in the seat cushion (16) on the support plate (8), **in that** the air-conveying device (9) is at least partly encased by a cut foam (14), **in that** the seat cushion (16) has at least one air duct (17), which leads from the cut foam (14) to the outlet device (18), and **in that** the at least one air duct (17) of the seat cushion (16) extends at least substantially perpendicular to the plane of the seat part element (6).

2. Vehicle seat according to Claim 1, **characterized in that** the cut foam (14) has at least one further air duct (15), which is fluidically connected firstly to the air-conveying device (9) and secondly to the one or the plurality of air ducts (17) of the seat cushion (16).

3. Vehicle seat according to one of the preceding claims, **characterized in that** the outlet device (18) is formed as an air-permeable tensioning layer (19), in particular a textile layer, of a cushion cover of the seat part element (6).

4. Vehicle seat according to one of the preceding claims, **characterized in that** the air-conveying device (9) is formed as an electric-motor fan (13), wherein the fan (13) is arranged at least substantially centrally on the support plate (8).

5. Vehicle seat according to Claim 2, **characterized in that** the at least one further air duct (15) of the cut foam (14) extends at least substantially in the plane of the seat part element (6).

6. Vehicle seat according to Claim 4, **characterized in that** the fan (13) has a housing (10) which is screwed and/or snapped onto the support plate (8).

7. Vehicle seat according to one of the preceding claims, **characterized in that** a backrest (3) is arranged on the seat part (2), in particular such that it is pivotably mounted.

8. Vehicle seat according to one of the preceding claims, **characterized in that** the seat part (2) and/or the backrest (3) each have a further ventilation device (22, 23) .

## Revendications

1. Siège de véhicule (1) destiné à un véhicule automobile, ledit siège de véhicule comprenant un cadre de siège (4) qui peut être fixé à un plancher de véhicule, une partie de siège (2) portée par le cadre de siège (4) et un dispositif de ventilation (21) qui comporte au moins un dispositif de transport d'air commandable (9) et au moins un dispositif d'évacuation (18) qui est relié fluidiquement au dispositif de transport d'air (9), un élément de partie de siège (6) qui prolonge la partie de siège (2) étant monté sur le cadre de siège (4) de manière à pouvoir coulisser longitudinalement par rapport à la partie de siège (2), et l'élément de partie de siège (6) comportant le dispositif de ventilation (21), **caractérisé en ce que** l'élément de partie de siège (6) comporte une plaque de support (8) qui est montée de manière coulissante sur le cadre de siège (4) et sur laquelle un coussin de siège (16) est disposé, le dispositif de transport d'air (9) étant disposé sur la plaque de support (8) dans le coussin de siège (16), **en ce que** le dispositif de transport d'air (9) est entouré au moins par zones d'une mousse découpée (14), **en ce que** le coussin de siège (16) comporte au moins un conduit d'air (17) qui va de la mousse découpée (14) au dispositif d'évacuation (18), et **en ce que** l'au moins un conduit d'air (17) du coussin de siège (16) s'étend au moins sensiblement perpendiculairement au plan de l'élément de partie de siège (6).

2. Siège de véhicule selon la revendication 1, **caractérisé en ce que** la mousse découpée (14) comporte au moins un autre conduit d'air (15) qui est relié fluidiquement au dispositif de transport d'air (9) d'une part et à l'au moins un conduit d'air (17) du coussin de siège (16) d'autre part.

3. Siège de véhicule selon l'une des revendications précédentes, **caractérisé en ce que** le dispositif d'évacuation (18) est conçu comme une couche de serrage (19) perméable à l'air, en particulier une couche textile, d'une housse de rembourrage de l'élément de partie de siège (6).

4. Siège de véhicule selon l'une des revendications précédentes, **caractérisé en ce que** le dispositif de transport d'air (9) est réalisé sous la forme d'un ventilateur (13) à moteur électrique, le ventilateur (13) étant disposé au moins sensiblement au milieu de la plaque de support (8).

5. Siège de véhicule selon la revendication 2, **caractérisé en ce que** l'au moins un autre conduit d'air (15) de la mousse découpée (14) s'étend au moins sensiblement dans le plan de l'élément de partie de siège (6).

6. Siège de véhicule selon la revendication 4, **caractérisé en ce que** le ventilateur (13) comporte un boîtier (10) qui est vissé et/ou encliqueté sur la plaque de support (8).

7. Siège de véhicule selon l'une des revendications précédentes, **caractérisé en ce qu'**un dossier (3) est disposé, notamment monté de manière pivotante, sur la partie de siège (2).

8. Siège de véhicule selon l'une des revendications précédentes, **caractérisé en ce que** la partie de siège (2) et/ou le dossier (3) comportent chacun un autre dispositif de ventilation (22,23).
